Europäisches Patentamt

European Patent Office

Office européen des brevets

(11) Publication number: **0 613 700 A1**

# EUROPEAN PATENT APPLICATION

(21) Application number: **94101308.8**

(22) Date of filing: **28.01.94**

(51) Int. Cl.5: **A63B 37/00**, C08L 7/00

(30) Priority: **29.01.93 US 10894**

(43) Date of publication of application:
**07.09.94 Bulletin 94/36**

(84) Designated Contracting States:
**DE FR GB SE**

(71) Applicant: **ACUSHNET COMPANY**
**333 Bridge Street**
**Fairhaven, Massachusetts 02719 (US)**

(72) Inventor: **Dalton, Jeffrey L.**
**14 Sleepy Hollow Road**
**North Dartmouth, MA 02747 (US)**
Inventor: **Morgan, William E.**
**8 Meadow Circle**
**Barrington, RI 02806 (US)**
Inventor: **Pasqua, Samuel**
**45 Division Street**
**Bristol, RI 02809 (US)**

(74) Representative: **Andrae, Steffen, Dr. et al**
**Patentanwälte**
**Andrae, Flach, Haug, Kneissl**
**Balanstrasse 55**
**D-81541 München (DE)**

(54) **Golf ball with improved cover.**

(57) Compositions having balata and a modifier such as polyolefin rubber in an amount sufficient to provide a Young's modulus of 400-5,000 psi. These compositions can be formed into golf ball covers having surprisingly improved resistance to shear damage.

## FIELD OF THE INVENTION

The present invention relates to golf balls and, more particularly, to golf ball covers made from balata formulations.

## BACKGROUND OF THE INVENTION

Three types of golf balls are on the market: one-piece, two-piece and wound. One-piece balls are molded from a homogeneous mass of material, while two-piece golf balls are made by molding a cover about a solid core. The solid core can be a single homogeneous mass, a plurality of pieces, or have varying physical characteristics from its center to its surface. Wound balls have a cover molded about a wound core that is prepared by winding thin elastic thread about a center.

Both two-piece and wound balls are made by molding covers about cores in one of two ways: (1) by injection molding of fluid cover stock material around a core which is held in a retractable pin mold; or (2) by compression molding preformed half-shells about a core. The preformed half-shells are formed by compression molding fluid cover stock material into half-shell molds and solidifying the cover stock material into a half-shell preform.

Balata was the standard material for golf ball covers until E.I. Du Pont de Nemours and Co. introduced Suryln®. Balata, however, continues to be an important cover material because of the control afforded by balata and because of the "click" and "feel" imparted by balata as compared to Surlyn®.

"Click" refers to the sound made when the club impacts upon the ball, and "feel" is the overall sensation imparted to the golfer when the ball is hit. Although "click" and "feel" are not quantifiable, they are very real characteristics of any golf ball and some golfers prefer balata covered balls for these very reasons.

The surfaces of balata covered golf balls, however, are prone to shear damage caused by grooves on the club face as the club face moves across the ball during impact. Shear damage often is shown as "scuff marks" on the ball surface. Scuff marks, although not as detrimental as cuts on the cover caused by the club face, nevertheless negatively affects the performance and durability of the ball.

The art has made various attempts to improve the resistance of golf balls covers to damage caused by the club face. These attempts have focused on addition of dienes to the balata. U.S. Pat. No. 4,984,803 adds cis-1,4 polybutadiene to balata. The disclosed formulations can have 5-30 phr of cis-1,4 polybutadiene.

U.S. Pat. No. 4,792,141 shows blending of 3-40 phr of polyoctenylene rubber with 100 phr balata to provide improved cut resistance. Use of more than 40 phr of polyoctenylene, however, was found to produce deleterious results.

U.S. Pat. No. 4,409,366 shows blends of balata and Surlyn™. Surlyn™ modified balata, however, lacks the click and feel provided by balata covered balls.

Japanese Kokoku 91048944 discloses a moldable polymer composition of 30-90 parts by weight of trans-polybutadiene, and 70-10 parts by weight of trans- polyisoprene; or 30-85 parts by weight of trans-polybutadiene, 85-10 parts by weight of trans-polyisoprene and 5-30 parts by weight of cis-polyisoprene. The disclosed compositions have a balance of hardness, impact resilience, low deformation temperature, high curing speed.

Other prior art methods have focused on vulcanization of the composition of the cover. U.S. Pat. No. 5,037,104 describes a method of ensuring sufficient vulcanization throughout a cover material of a 70% t-polyisoprene and at least one of styrene-butadiene, natural rubber, or cis-polyisoprene.

Although the art has provided golf balls with improved durability and cut resistance, nothing in the art shows minimizing shear damage by selectively modifying the composition to control the Young's modulus of the composition. A need, moreover, still exists for golf balls that have covers which show improved resistance to shear damage but provide the "click" and "feel" of balata covered balls.

## SUMMARY OF THE INVENTION

In accordance with the invention, compositions comprising balata and modifiers for reducing the Young's modulus of the balata are provided. These compositions can be formed into golf ball covers having surprisingly improved resistance to shear damage.

The invention is directed to balata compositions having balata and a modifier such as polyolefin rubber in an amount sufficient to provide a Young's modulus of 400-5,000 psi, especially 1,000 to 3,000 psi. The modifier typically is 10 phr to 90 phr by weight based on the combined amounts of modifier and balata, preferably 20 phr to 60 phr, more preferably 20 phr to 40 phr, most preferably 20 phr. Useful modifiers include but are not limited to cis-polyisoprene, cis-polybutadiene, trans-polybutadiene, styrene-butadiene, and combinations thereof. A particularly useful modifier is trans-polybutadiene present in an amount of 20 phr by weight based on the combined amounts of modifier and balata.

## DETAILED DESCRIPTION OF THE INVENTION

In accordance with the invention, selected modifiers are mixed with balata to provide compositions which can be formed into golf ball covers having improved shear resistance. In order to make a golf ball with a cover formed from a composition made in accordance with this invention, conventional mixing and molding procedures are used. Generally, the components of the composition are mixed in a mill such as a two roll mill. The blended composition is then formed into slabs. The blended composition is maintained in a slab state until such time as golf ball covers are ready to be molded. When the covers are ready to be molded, strips are cut from the slab and formed into half shells which are formed about a core. The core either may be solid or wound. Wound cores are preferred in this invention. Such molding procedures for forming the blended composition around a golf ball core are well known to those skilled in the art.

A variety of modifiers may be employed in the balata formulations of the invention. Useful modifiers include polyolefin rubbers such as cis-polyisoprene, cis-polybutadiene, trans-polybutadiene, styrene-butadiene, block copolymers such as styrene-butadiene and styrene-isoprene, polyoctylene, polyethylene, chlorosulfonated polyethylene, ethylene copolymers, polypropylene, ionomers, butyl rubber, halobutyl rubber, copolymers of isobutylene and isoprene, ethylene-propylene rubbers, nitrile rubbers, thermoplastic elastomers, and polyurethanes and combinations thereof. Preferably, the modifiers are polyolefin rubbers such as cis-polyisoprene, cis-polybutadiene, trans-polybutadiene, and styrene-butadiene. Most preferably, the modifier is trans-polybutadiene.

The modifier is employed in the balata formulations of the invention in an amount sufficient to achieve a Young's modulus of 400-5,000 psi, preferably 1,000-3,000 psi, as measured by ASTM method D638-84 wherein the chord technique is employed. The amount of modifier may be present in an amount of 10 phr to 90 phr by weight based on the combined amounts of modifier and balata, preferably 20 phr to 60 phr, more preferably 20 to 40 phr, most preferably 20 phr. Additives for imparting color, hardness, surface finish and the like also may be included in the balata formulations. Useful additives include resins such as polybutadiene, polyurethane, polyisoprene, styrene-butadiene, and the like; whitening agents such as titanium dioxide, calcium carbonate and the like; dyes such as phthalocyanine blue, phthalocyanine green such as Heligen™ from BASF Corp., and the like.

Two and three-piece golf balls can be formed with a cover comprised of the balata compositions of the invention by compression molding. In compression molding, half-shells of the modified balata compositions of the invention are made by compression molding a cover stock formulation into a conventional half-shell mold at about 80-110°C by methods known in the art. The formed half-shells then are placed about a solid core or a core having rubber windings thereon to provide a core assembly that is introduced into a compression molding machine such as that shown in U.S. Patent No. 4,508,309. The resulting golf balls are cooled in the mold and removed when the cover has solidified sufficiently to be handled without deforming.

The shear damage resistance of balls which employ covers made of the modified balata compositions of the invention are evaluated by employing a True Temper™ mechanical golfer machine. Typical initial settings of the machine are given below.

| INITIAL SETTINGS OF TRUE TEMPER™ MACHINE | |
| --- | --- |
| Club: | Sand wedge having box grooves |
| Club setting: | 8 iron |
| Pressure: | 94 psi |
| Brake: | 34 psi |
| Swing Plane: | 59 degrees |
| Backswing angle: | 26 degrees |
| Tee Height: | 0.375 inches |

Employing the above initial settings, two dozen commercially available Titleist™ Tour-100 balls are struck under conditions of room temperature and ambient atmosphere to warm up the machine. Thereafter, six commercially available Titleist™ Tour-100 balls are struck by the testing machine employing these initial settings to provide Control Set I. The shear damage imparted to the balls of Control Set I is visually compared to the shear damage imparted to a set of six commercially available, randomly selected Titleist™ Tour-100 balls damaged under actual playing conditions, i.e., reference balls. The settings of the machine then are adjusted to impart a level of shear damage to a second set of six commercially available Titleist™ Tour-100 balls, i.e., Control Set II, equivalent to that observed in the reference balls. Using the same machine setup employed with the balls of Control Set II, six Titleist™ Tour-100 balls employing the modified balata covers of the invention (test balls) are struck by the machine. Improvements in resistance to shear damage to the covers of the test balls relative to the balls of Control Set II is evaluated by visual inspection.

In conducting the above tests, the club face is cleaned, sprayed with water, and maintained wet between every shot. Each ball is randomly selected from its respective category and is struck twice. The damaged area on the cover is visually identified and circled.

After the test balls are struck by the testing machine, they are visually inspected by a group of six people for shear damage. In order to assess shear damage imparted to the test balls, a comparison set of seven reference standard balls having varying levels of cover damage are provided corresponding to the criteria below:

| COVER DAMAGE | |
|---|---|
| Reference Ball Standard | Rating |
| No marks, no damage | 1 |
| Marked, no cut | 2 |
| slight cut, no material missing | 3 |
| Moderate cut, no material missing | 4 |
| Deep cut, no material missing | 5 |
| Cover cut & peeled, no material missing | 6 |
| Cover peeled, material Missing | 7 |

Evaluation of shear damage imparted to the test balls which employ covers formed of the modified balata compositions of the invention is made by visual matching of the cover damage to the appropriate reference standard ball. Shear damage ratings are based on the average of six visual ratings according to the criteria above.

These and other aspects of the present invention may be more fully understood by reference to the following non-limiting examples.

EXAMPLES

Example 1

The components below are mixed in a two roll mill. The compositions are molded into half shells which are compression molded about a wound core into balls.

| Component | Amount (phr) |
|---|---|
| Balata | 80 |
| 55% trans-PBD | 20 |
| $TiO_2$ | 17 |
| ZnO | 12.4 |
| Sulfur | 1.3 |
| Stearic Acid | 0.2 |
| Thiotax | 0.1 |
| Blue Pigment | 0.002 |

All amounts are based on the combined weight of the trans-polybutadiene modifier and the balata components.

The molded balls are immersed in an aqueous solution of RR2 crystals from Rockland React-Rite Co., Rockmart, Georgia to aid vulcanization. The Young's modulus and shear damage ratings are evaluated according to the procedures given above. Tensile strength is measured according to ASTM method D638-84. The resulting physical properties and shear damage ratings are shown in Table 1.

Examples 2-7:

Following the procedure of Example 1, golf ball covers having varying amounts of 55% trans-polybutadiene are mixed with balata as shown in Table 1. Young's modulus and shear damage ratings are evaluated according to the procedures given above. Tensile strength is measured according to ASTM method D638-84. The resulting physical properties and shear damage ratings are shown in Table 1.

TABLE 1

| Example | t-PBD Level[1] (phr) | Young's Modulus (psi) | Shear Damage Rating | Tensile Strength (psi) |
|---|---|---|---|---|
| 1 | 15 | 4252 | 2.8 | 3673 |
| 2 | 20 | 3064 | 2.8 | 3349 |
| 3 | 25 | 2517 | 2.6 | 3037 |
| 4 | 40 | 1479 | 2.2 | 2427 |
| 5 | 10 | 5937 | 3.4 | 4000 |
| 6 | 5 | 7037 | 4 | 4222 |
| 7 (Control) | 0 | 9200 | 5 | 4650 |

[1] Parts by weight trans-polybutadiene based on 100 parts by weight of the combined amounts of trans-polybutadiene and balata.

Example 8-31

Using the procedure of Example 1, balata is mixed with varying amounts of trans-polybutadiene, cis-polyisoprene, cis-polybutadiene, and styrene-butadiene to provide modified balata compositions. Two and three piece golf balls are made as described above using each of these compositions as covers. The amount of modifier, the Young's modulus, and the shear damage ratings of the covers formed from these compositions are given in Table 2.

TABLE 2

| Example | Modifier Type and Amount | Composition | Shear Damage Rating | Young's Modulus (psi) |
|---|---|---|---|---|
| 8 | Control | No Modifier | 5.3 | 8863 |
| 9 | 50 phr Diene 35N | 55% trans-PBD[1] | | 902 |
| 10 | 70 phr Diene 35N | 55% trans-PBD[1] | | 451 |
| 11 | 90 phr Diene 35HF | 55% trans-PBD[1] | | |
| 12 | 20 phr Furen 88 | 88% trans-PBD[2] | 4.4 | 6031 |
| 13 | 40 phr Furen 88 | 88% trans-PBD[2] | 3.5 | 4600 |
| 14 | 12 phr Natsyn 2210 | cis-Polyisoprene[3] | 4.3 | 4860 |
| 15 | 25 phr Natsyn 2210 | cis-Polyisoprene[3] | 2.8 | 2000 |
| 16 | 12 phr Shell BR1220 | cis-PBD[4] | 4.9 | 4680 |
| 17 | 25 phr Shell BR1220 | cis-PBD[4] | 3.0 | 3000 |
| 18 | 12 phr SBR 1502 | Styrene-Butadiene[5] | 4.3 | 5050 |
| 19 | 25 phr SBR 1502 | Styrene-Butadiene[5] | 3.0 | 2400 |
| 20 | 50 phr Furen 88 | 88% t-PBD[2] | | |
| 21 | 70 phr Furen 88 | 88% t-PBD[2] | | |

TABLE 2 (Con't)

| Example | Modifier Type and Amount | Composition | Shear Damage Rating | Young's Modulus (psi) |
|---|---|---|---|---|
| 22 | 90 phr Furen 88 | 88% t-PBD[2] | | |
| 23 | 50 phr Natsyn 2210 | cis-polyisoprene[3] | | |
| 24 | 70 phr Natsyn 2210 | cis-polyisoprene[3] | | |
| 25 | 90 phr Natsyn 2210 | cis-polyisoprene[3] | | |
| 26 | 50 phr Shell BR1220 | cis-PBD[4] | | |
| 27 | 70 phr Shell BR1220 | cis-PBD[4] | | |
| 28 | 90 phr Shell BR1220 | cis-PBD[4] | | |
| 29 | 50 SBR 1502 | styrene-butadiene[5] | | |
| 30 | 70 SBR 1502 | styrene-butadiene[5] | | |
| 31 | 90 SBR 1502 | styrene-butadiene[5] | | |

1. Trans-polybutadiene from Firestone.
2. Trans-polybutadiene from Asahi Chemical Co.
3. From Goodyear.
4. Cis-polybutadiene from Shell Chemical Co.
5. Shell Chemical Co.

## Claims

1. A balata composition comprising balata and at least one polyolefin rubber modifier, wherein said modifier is present in an amount sufficient to provide a Young's modulus of 400-5,000 psi.

2. The balata composition according to claim 1, wherein said modifier is present in an amount sufficient to provide a Young's modulus of about 1,000 to 3,000 psi.

3. The balata composition according to claim 1, wherein said modifier is about 10 phr to 90 phr by weight based on the combined amounts of modifier and balata.

4. The balata composition according to claim 1, wherein said modifier is about 20 phr to 60 phr by weight based on the combined amounts of modifier and balata.

5. The balata composition according to claim 1, wherein said modifier is about 20 phr to 40 phr by weight based on the combined amounts of modifier and balata content.

6. The balata composition according to claim 1, wherein said modifier is selected from the group of cis-polyisoprene, cis-polybutadiene, trans-polybutadiene, styrene-butadiene, and combinations thereof.

7. The balata composition according to claim 5, wherein said modifier is either of trans-polybutadiene or cis-polyisoprene.

8. The balata composition according to claim 1, wherein said modifier is trans-polybutadiene and is present in an amount of about 20 phr by weight based on the combined amounts of modifier and balata.

9. A golf ball comprising a core and a cover, said cover comprising balata and at least one polyolefin rubber modifier, wherein said modifier is present in an amount sufficient to provide a Young's modulus of 400-5,000 psi.

10. The ball of claim 8, wherein said modifier is present in an amount sufficient to provide a Young's modulus of about 1,000 to 3,000 psi.

11. The ball of claim 9, wherein said modifier is about 10 phr to 90 phr by weight based on the combined amounts of modifier and balata.

12. The ball of claim 9, wherein said modifier is about 20 phr to 60 phr by weight based on the combined amounts of modifier and balata.

13. The ball of claim 9, wherein said modifier is about 20 phr to 40 phr by weight based on the combined amounts of modifier and balata.

14. The ball of claim 9, wherein said modifier is selected from the group of cis-polyisoprene, cis-polybutadiene, trans-polybutadiene, styrene-butadiene, and combinations thereof.

15. The ball of claim 9, wherein said modifier is trans-polybutadiene and is present in an amount of about 20 phr by weight of the combined amounts of trans-polybutadiene and balata.

16. The ball of claim 9, wherein said modifier is either of trans-polybutadiene or cis-polyisoprene.

17. The golf ball of claim 9, wherein said golf ball is either a two-piece or a three-piece ball.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 524 841 (WILSON SPORTING GOODS)<br><br>* claims; figures 1,2 * | 1-6, 9-14,17 | A63B37/00<br>C08L7/00 |
| A,D | US-A-4 984 803 (LLORT ET AL.)<br>* the whole document * | 1-6,9-14 | |
| A | GB-A-815 634 (THE WORTHINGTON BALL COMPANY)<br>* claims; figures * | 1-6, 9-14,17 | |
| A,D | US-A-4 792 141 (LLORT)<br>* abstract; claims * | 1-5,9-13 | |
| A | US-A-3 838 098 (KENT)<br>* claims * | 1-5,9-13 | |

TECHNICAL FIELDS SEARCHED    (Int.Cl.5)

A63B
C08L

The present search report has been drawn up for all claims

| Place of search | Date of completion of the search | Examiner |
|---|---|---|
| THE HAGUE | 13 April 1994 | Giménez Burgos, R |

EPO FORM 1503 03.82 (P04C01)